# FASCICULE DE BREVET EUROPEEN

(11) **EP 0 911 624 B1**
(45) Date de publication et mention de la délivrance du brevet: **16.07.2003**
(21) Numéro de dépôt: 98402583.3
(22) Date de dépôt: 19.10.1998
(51) Int. Cl.: G01N 1/32, G21C 17/06

(54) **Procédé d'attaque thermique en conditions oxydantes d'une ceramique**
Keramik-Thermalätzverfahren unter oxidierenden Bedingungen
Method of thermal etching of a ceramic in oxidising atmosphere

(30) Priorité: 21.10.1997 FR 9713168
(43) Date de publication de la demande: 28.04.1999
(73) Titulaire: COMMISSARIAT A L'ENERGIE ATOMIQUE, 75015 Paris (FR); COMPAGNIE GENERALE DES MATIERES NUCLEAIRES, 78140 Velizy Villacoublay (FR)
(72) Inventeur: Charollais, François, 13650 Meyrargues (FR); Bauer, Mireille, 04100 Manosque (FR); Coster, Michel, 14610 Cairon (FR); Piluso, Pascal, 13100 Aix en Provence (FR); Fort, Claude, 84800 Lagnes (FR)
(74) Mandataire: Poulin, Gérard

(56) Documents cités:
- EP-A- 0 616 339
- US-A- 4 548 903
- G C GRAPPIOLO: "Thermal etching as a mean to evidence grain-boundaries in high density UO2" ENRGIA NUCLEARE, vol. 11, mai 1964, page 273 XP002070329 MILAN, IT
- ABREFAH J ET AL: "High temperature oxidation of UO2 in steam-hydrogen mixtures" J NUCL MATER;JOURNAL OF NUCLEAR MATERIALS JAN 1994, vol. 208, no. 1-2, janvier 1994, pages 98-110, XP002070330
- SARI C ET AL: "CERAMOGRAPHY OF URANIUM-PLUTONIUM OXIDES- 2" PRAKT METALLOGR MAR 1970, vol. 7, no. 3, mars 1970, pages 146-52, XP002070331
- R L COLOMBO ET AL: "Thermal etching figures in ceramic bodies" JOURNAL OF NUCLEAR MATERIALS, vol. 42, 1972, pages 345-347, XP002070332 AMSTERDAM, NL

## Description

L'invention a trait à un procédé d'attaque thermique en conditions oxydantes d'une céramique en vue en particulier de révéler ses joints de grains et d'étudier sa microstructure granulaire.

L'invention s'applique aux céramiques techniques et nucléaires et en particulier à UO₂ et aux mélanges (U, Pu)O₂.

L'étude structurale d'un matériau implique généralement une préparation métallographique soignée de ce matériau en vue de son analyse morphologique.

Pour étudier la structure, il faut rendre visible les divers éléments constitutifs de celle-ci et donc, précisément révéler les joints de grain afin de rendre possible la mesure de taille de grains du matériau. Dans le cas de matériaux polyphasés, la taille de grains doit être mesurée sur chaque phase indépendamment.

L'automatisation des procédés de mesure concernant la taille des grains, qui mettent en oeuvre des logiciels d'analyse d'images nécessite l'obtention d'images de bonne qualité. Cette qualité est liée à celle de la révélation des joints de grains et donc au procédé d'attaque mis en oeuvre.

Parmi ces derniers, on peut citer dans le cas des céramiques, les attaques chimiques acides.

Les procédés d'attaques chimiques sont décrits par exemple dans l'ouvrage de V. Tebaldi : « Kernforschung und Technologie » « Metallographie und Thermoanalyse von keramischen Kernbrennstoffen - Ein Handbuch für Laboranten und Versuchsingenieure, Kommission des Europäischen Gemeinschaften - 1988, EUR 11716 DE.

D'un point de vue physico-chimique, l'attaque acide par voie chimique d'une surface polie d'un échantillon monophasé comme c'est le cas de UO₂ peut se résumer par l'action de deux mécanismes concurrents:
- une attaque de la surface des grains à des vitesses différentes suivant leur orientation cristallographique. Ce facettage des grains va induire des différences de réflectivité, qui vont permettre de les individualiser lors de leur observation par microscopie optique,
- une attaque locale spécifique aux joints de grains, due au désordre cristallographique important et à la présence d'impuretés. Cette attaque va créer un sillon à l'emplacement du joint de grains dont la forme dépend des tensions superficielles et intergranulaires. Elle est donc directement liée aux différences d'orientation cristallographique des deux grains adjacents et sera donc hétérogène dans le plan de l'échantillon.

Dans le cas des céramiques polyphasées telles que le combustible mixte d'uranium et de plutonium, les potentiels chimiques des différentes phases ne sont pas les mêmes. Ces différences de potentiel chimique sont importantes, elles vont conduire, in fine, à une attaque préférentielle d'une phase par rapport à l'autre.

La révélation de la microstructure combustibles -(U,Pu)O₂- correspond donc à ce principe.

Cette spécificité permet aux expérimentateurs d'étudier indépendamment la structure granulaire des zones à faibles et à fortes teneurs en plutonium. Ceux-ci procèdent en deux attaques chimiques spécifiques :
- une première attaque, destinée à révéler les zones faiblement enrichies en Pu (matrice), est réalisée par une solution acide (H₂O, H₂O₂, H₂SO₄) à température ambiante pendant 2 à 20 minutes,
- l'échantillon est ensuite repoli avant de subir une seconde attaque acide (H₂O, H₂SO₄, NH₄HF₂) à 70°C pendant 1 à 3 minutes. Celle-ci permet de révéler la totalité de la surface comprenant les zones à fortes et faibles teneurs en plutonium.

Cependant, la maîtrise de cette dernière attaque s'avère particulièrement délicate, les zones faiblement enrichies en plutonium étant susceptibles de subir une révélation trop poussée.

L'attaque chimique d'une céramique en particulier d'une céramique de combustible nucléaire notamment de type (U, Pu)O₂ comporte un certain nombre d'inconvénients, entre autres :
- impossibilité de révéler uniformément une coupe céramographique pour des raisons évoquées précédemment,
- difficulté à définir une procédure reproductible de révélation car il faut partir de solutions toujours neuves,
- coloration différente des grains, générée par les multiples orientations cristallographiques des grains, ne permettant pas l'automatisation des mesures de taille de grains,
- génération d'effluents actifs (dans le cas des céramiques « nucléaires ») et corrosion des équipements voisins par dégagements de vapeurs acides en boîte à gants.

Il découle de ce qui précède que l'utilisation d'une attaque chimique en tant que technique de révélation des joints de grains d'une céramique et notamment d'une céramique jouant le rôle de combustible nucléaire (céramique « nucléaire ») n'est pas satisfaisante car, du fait de la révélation incomplète des joints de grains les images obtenues sur la céramique ou combustible attaqué chimiquement sont de médiocre qualité et ne permettent pas le traitement et l'analyse automatiques des images.

Une autre méthode de révélation des joints de grains est le gravage thermique qui est couramment utilisé pour l'étude de la structure granulaire des céramiques techniques par exemple des céramiques telles que l'alumine, le carbure de silicium ou l'oxyde de cérium.

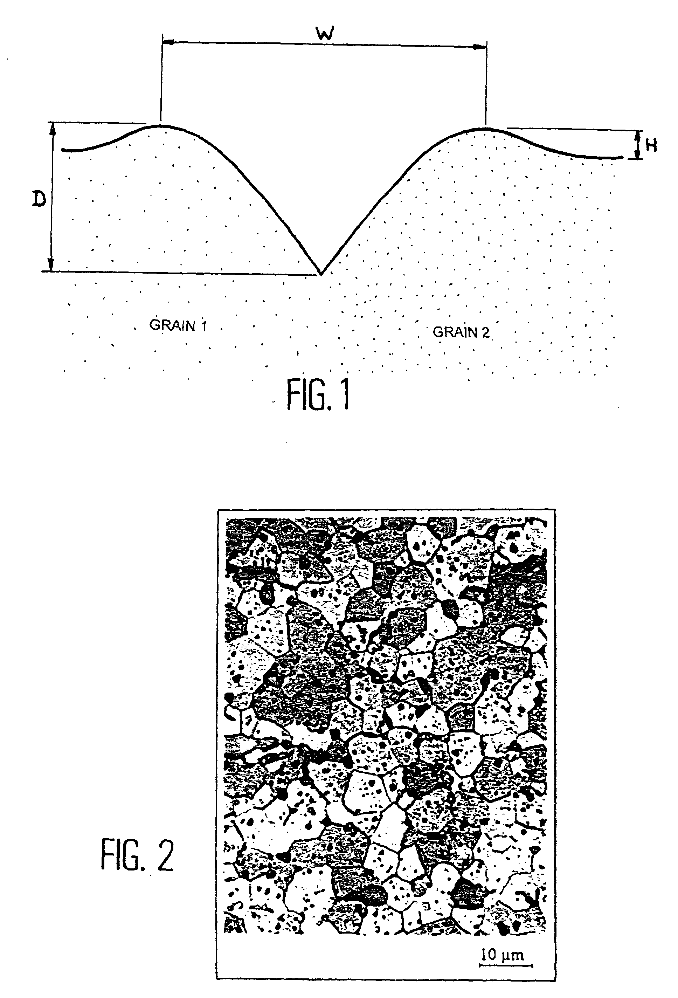

Le gravage thermique est basé sur le fait que lorsqu'on chauffe un solide polycristallin à une température T en présence d'une phase vapeur ou liquide en équilibre thermodynamique avec le solide, des sillons apparaissent aux lignes d'émergence des joints de grains par des mécanismes diffusionnels de transport de matière (diffusion superficielle, diffusion en volume et évaporation condensation). Ce phénomène est décrit sur la figure 1 qui représente le sillon du joint de grains révélé thermiquement.

Le gravage thermique des céramiques en général est réalisé sous une atmosphère identique à celle utilisée lors de son élaboration.

Le gravage thermique de l'UO₂ a été étudié mais uniquement dans les conditions spécifiques suivantes qui sont celles d'une attaque thermique réductrice :
- les expériences d'attaque thermique tirées de la littérature sont en général effectuées sur des pastilles d'UO₂ préalablement recuites pendant des temps suffisamment importants, par exemple, deux semaines à 1700°C, comparativement aux durées des gravages thermiques. Ce recuit est indispensable pour stabiliser la microstructure et s'affranchir ainsi d'un éventuel grossissement des grains, qui pourrait entraîner d'autres mécanismes que celui (ou ceux) responsable(s) du gravage thermique du sillon,
- les études menées sur l'UO₂₊ₓ sur-stoechiométrique ont été réalisées avec un oxyde d'uranium dont le rapport oxygène/uranium était déterminé et n'évoluait pas en cours d'expérience.

La plupart des publications décrivent donc des attaques thermiques de combustibles UO₂ₓ sous haute température voisines de 1650-1700°C et dans une atmosphère réductrice ou neutre.

Ainsi, l'article de G.C Grappiolo « Thermal etching as a mean to evidence grain boundaries in high density UO₂ », energia nucleare, vol 11, n°5, mai 1964 détaille-t'il le traitement d'oxyde d'uranium de forte densité dans une atmosphère d'hydrogène à 1650 °C.

De même, l'article de R.L Colombo et I. Amato « Thermal etching figures in ceramic bodies » Journal of nuclear materials 42(1972) 345-347, North Holland Publishing Co, Amsterdam, décrit l'attaque thermique de céramiques telles que l'alumine et l'UO₂ dans une atmosphère réductrice d'hydrogène et à température élevée voisine de 1700 °C.

Par ailleurs, le gravage thermique d'oxydes mixtes de plutonium et d'uranium tels que le MOX n'a, à notre connaissance, pas été décrite dans la littérature.

Les inventeurs ont mis en évidence, en réalisant des attaques thermiques sous atmosphère réductrice d'échantillons de UO₂ notamment à une température de 1650°C, sous H₂ sec, pendant une durée de 15 minutes, que bien que les révélations des joints de grains obtenues par attaque thermique sous atmosphère réductrice soient de meilleure qualité que celles obtenues après attaques chimiques un certain nombre de défauts et d'inconvénients demeuraient, en particulier :
- une image optique résultante des joints de grains non uniforme. Le réseau de joints de grains binarisé automatiquement présente donc des discontinuités qui nécessitent une correction manuelle importante lors de l'étape de traitement de l'image;
- la mise en évidence de défauts cristallins tels que des stries à la surface du matériau ou des remontées de dislocations. Ces défauts génèrent un bruit de fond qui sera d'autant plus gênant que l'échantillon sera poreux, car des confusions peuvent se produire entre la porosité, le bruit de fond et le réseau de joints de grains,
- la nécessité d'une technologie de four adaptée au choc thermique et à une montée rapide à des températures voisines de 1700 °C.

Une telle technologie de four est complexe à mettre en oeuvre et très onéreuse.
- le fait d'opérer à des températures aussi élevées, qui peuvent être supérieures à la température de frittage est susceptible de favoriser des phénomènes de croissance granulaire pouvant biaiser la mesure de la taille des grains.

De même, les inventeurs ont mis en évidence des phénomènes analogues lors de l'attaque thermique en conditions réductrices des combustible (U, Pu)O₂.

Ainsi des essais d'attaque thermique effectuées avec un mélange d'Argon, de 5% d'hydrogène, et de 2600 pm d'H₂O à des températures élevées proches de 1600°C, pendant 10 à 30 minutes ont-ils conduits à une révélation de la surface des combustibles (U, Pu)O₂ identique à celle obtenue sur l'oxyde d'uranium, avec en particulier des hétérogénéités dans le gravage thermique des joints de grains.

De plus, dans le cas précis des combustibles (U, Pu)O₂ l'attaque thermique réductrice ne permet pas, à l'instar de l'attaque chimique, de révéler de manière distincte les zones à fortes teneurs en plutonium.

Une différence de gravage suivant la teneur locale en plutonium des grains n'est absolument pas obtenue lors des attaques thermiques des combustibles (U, Pu)O₂ en conditions réductrices, à savoir sous hydrogène humidifié.

Or, la caractérisation exhaustive du combustible nucléaire (U, Pu)O₂ nécessite de mesurer la taille des grains distinctement sur les zones à faibles et fortes teneurs en plutonium ce qui implique que ces zones soient identifiables les uns par rapport aux autres. Cette condition n'est pas remplie par les attaques ou gravures thermiques sous atmosphère réductrice de l'art antérieur.

Le but de la présente invention est de fournir un procédé d'attaque destiné en particulier à révéler la structure granulaire des céramiques et notamment des céramiques dites « nucléaires » telles que UO₂ et (U, Pu)O₂ qui ne présente pas les inconvénients, limitations et défauts des procédés de l'art antérieur, et qui résolve les problèmes posés par les procédés d'attaque de l'art antérieur.

Ce but et d'autres encore sont atteints par un procédé d'attaque thermique d'une céramique dans lequel, conformément à l'invention ladite attaque thermique est réalisée dans un four à atmosphère contrôlée constituée par un gaz oxydant fournissant un potentiel chimique d'oxygène de -75 kJ/mol à -125 kJ/mol, et comprend les étapes successives suivantes :
- montée rapide en température du four à une vitesse de 900°C/h à 1500°C/h depuis la température initiale jusqu'à un palier de température;
- maintien de la température audit palier à une valeur de 1250°C à 1450°C pendant une durée de 15 minutes à 30 minutes;
- descente en température jusqu'à la température finale.

L'attaque thermique des céramiques est connue dans l'art antérieur mais il s'agit d'une attaque sous atmosphère réductrice réalisée à haute température et non d'une attaque sous atmosphère oxydante réalisée à basse température.

Une attaque thermique dans les conditions faisant l'objet de la revendication 1 n'a jamais été décrite, ni suggérée dans l'art antérieur pour tous les types de céramiques que ce soient des céramiques dites techniques ou des céramiques nucléaires.

Le procédé d'attaque thermique oxydante selon l'invention dans lequel on opère à relativement basse température c'est-à-dire de 1250 à 1450°C, ne présente aucun des inconvénients des procédés d'attaque chimique.

En particulier, on ne met en effet en oeuvre aucune solution acide, donc il ne se produit aucune corrosion des équipements. Dans le cas des céramiques nucléaires aucun effluent radioactif n'est généré, ce qui évite d'avoir recours à des installations de traitement supplémentaires en aval du procédé d'attaque.

Par rapport aux procédés d'attaque thermique en atmosphère réductrice les températures mises en oeuvre dans le procédé de l'invention (1250 à 1450°C) sont nettement inférieures ce qui permet d'utiliser un four de technologie plus simple et nettement moins onéreuse. Ainsi il sera notamment possible de substituer aux résistances en molybdène des résistances en chromite de lanthane beaucoup moins fragiles.

L'utilisation de températures d'attaques relativement basses, inférieures à la température de frittage, permet également de limiter les phénomènes de croissance granulaire, et d'autres susceptible de biaiser les mesures effectuées sur la céramique attaquée.

Mais la caractéristique essentielle du procédé selon l'invention est qu'il permet contrairement aux procédés chimiques et thermiques de l'art antérieur d'obtenir des révélations céramographiques d'une qualité jusqu'alors jamais atteinte.

On obtient des images optiques satisfaisantes des joints de grains de l'ensemble de la surface de l'échantillon qui peut être segmentée et traitée automatiquement par analyse d'images.

La surface de la céramique est attaquée, révélée uniformément, de manière homogène, autrement dit tous les joints de grain sont attaqués et révélés, et la géométrie des sillons de joints de grains est symétrique, homogène et régulière, à l'opposé des procédés de l'art antérieur ou de nombreux sillons de joints de grains présentent une dissymétrie évidente.

De tels résultats sont atteints en se plaçant en particulier dans la plage spécifique de potentiel chimique d'oxygène selon l'invention qui est de -75 kJ/mol à -125 kJ/mol de préférence de -100 kJ/mol.

Enfin, la durée de l'attaque thermique selon l'invention qui est de préférence de 15 à 30 minutes est fortement réduite ce qui occasionne un important gain de temps.

L'appareil dans lequel est réalisé l'attaque thermique selon l'invention est un four, mais à terme recouvre tout dispositif, enceinte etc... dans lequel peut être réalisé l'attaque dans les conditions du procédé de l'invention.

Il peut s'agir par exemple de tout four d'attaque thermique adéquate qui présente généralement une faible inertie thermique autorisant des vitesses de montée et éventuellement de descente en température élevées.

Parmi les types de four convenant pour le procédé de l'invention, on peut citer par exemple un four tubulaire vertical ou un four de thermobalance.

Le four est un four à atmosphère contrôlée, cela signifie généralement que la composition de l'atmosphère dans le volume intérieur du four est parfaitement maîtrisée, par exemple en effectuant un balayage en continu de l'intérieur du four par le gaz oxydant à un débit déterminé, régulé.

Toute céramique peut être traitée par le procédé selon l'invention qu'il s'agisse d'une céramique dite « technique » ou d'une céramique dite « nucléaire ».

La céramique traitée est constituée de préférence par un ou plusieurs oxyde(s) réfractaire(s) de métaux choisis par exemple parmi les oxydes d'aluminium, les oxydes de cérium, les oxydes de métaux de la famille des actinides tels que PuO₂, UO₂ et ThO₂ et les oxydes mixtes de ces métaux tels que (U, Pu)O₂.

La céramique peut être une céramique monophasée mais il peut s'agir aussi d'une céramique polyphasée par exemple biphasée. Le procédé selon l'invention s'applique de manière particulièrement avantageuse à ces céramiques polyphasées dont il permet de révéler les différentes zones, ce qui était jusqu'à présent impossible.

Avantageusement, selon l'invention, ladite céramique est un combustible nucléaire qui se présente de préférence sous la forme d'une pastille, préparée à partir de poudre d'UO₂, ou bien un combustible nucléaire de type MOX. Le MOX est un combustible nucléaire (une céramique nucléaire) préparé le plus souvent par pastillage et frittage d'un mélange de poudres d'oxyde d'uranium et d'oxyde de plutonium selon un procédé dit procédé MIMAS (MIcronization of MASterblend).

Ce procédé de fabrication génère une microstructure propre au combustible nucléaire MOX dans laquelle des zones de mélange mère (îlots plutonifères à forte teneur en PuO₂) restent présentes dans la matrice (zone à faible teneur en PuO₂ et constituée essentiellement de UO₂) après frittage et sont à l'origine d'une répartition singulière du plutonium et de la taille des grains au sein de la pastille.

La caractérisation de cette structure complexe qui était jusqu'alors extrêmement difficile, est rendue possible par le procédé selon l'invention.

Le procédé selon l'invention effectuée sur le MOX présente l'avantage supplémentaire de réaliser une attaque sélective qui permet de révéler de manière distincte la matrice et les îlots plutonifères ou zones de mélange mère. Cette différence de gravage, obtenue de manière surprenante par le procédé selon l'invention n'est jamais obtenue par les attaques thermiques en conditions réductrices et est due au potentiel chimique d'oxygène spécifique mis en oeuvre dans le procédé de l'invention de -75 à -125 kJ/mol de préférence de -100 kJ/mol.

En effet, des conditions d'attaque moins oxydantes avec un potentiel chimique d'oxygène en dehors de la plage citée et se situent par exemple dans le domaine de -150 kJ/mol à -200 kJ/mol ne permettent pas de distinguer les îlots plutonifères à forte teneur en plutonium du reste de la matrice.

Le gaz oxydant est de préférence constitué d'un gaz vecteur et d'oxygène.

Le gaz vecteur est de préférence choisi parmi le CO₂, l'argon, les autres gaz inertes tels que l'azote et leurs mélanges.

Avantageusement, le gaz vecteur est le CO₂, on a remarqué en effet que le CO₂ permet d'obtenir des révélations céramographiques de meilleure qualité, car ce gaz se décompose « in-situ » aux températures du traitement thermique en fournissant ainsi un apport supplémentaire en oxygène par rapport à la quantité indiquée ci-dessous (c'est-à-dire que la proportion d'oxygène est alors, après décomposition, de 100 à 3000 vpm au lieu de 10 à 3000 vpm comme ci-dessous).

La proportion d'oxygène dans le gaz oxydant est en effet généralement de 10 à 3000 vpm, de préférence de 100 à 1000 vpm par exemple 1000 vpm.

Un gaz oxydant préféré est (au départ) constitué de CO₂ et de 10 vpm d'oxygène, un autre gaz oxydant est constitué d'argon et de 1000 vpm d'oxygène, on se situe ainsi dans la plage de potentiel d'oxygène conforme à l'invention.

On a vu plus haut que la température d'attaque, c'est-à-dire la température du palier est de 1250 à 1450 °C, de préférence cette température est de 1300 à 1400°C, une température voisine de 1350°C apparaît comme un excellent compromis eu égard à la qualité de la révélation et de l'image obtenue.

Des conditions d'attaques particulièrement préférées seront par exemple de 1350°C pendant 30 minutes sous atmosphère de CO₂ + 10 vpm d'O₂ pour les céramiques UO₂ et MOX.

La descente en température du four suite au palier est généralement réalisée à la même vitesse que la montée c'est-à-dire à une vitesse de 900°C/h à 1500°C/h jusqu'à la température finale.

Les températures initiales et finales sont généralement toutes deux la température ambiante.

Le procédé est réalisé généralement sous la pression atmosphérique (1 atm).

Généralement, et préalablement à l'attaque thermique proprement dite, c'est-à-dire avant que la céramique ne soit introduite dans le four, celle-ci est soumise à un traitement de polissage, par exemple à l'aide de papiers abrasifs dont la taille de grains est successivement de plus en plus petite, jusqu'à 15 µm par exemple. On effectue généralement un polissage final à l'aide par exemple d'un feutre recouvert d'une pâte diamantée dont les grains mesurent 1 µm.

L'invention concerne également un procédé d'étude de la microstructure d'une céramique dans lequel :
- la structure granulaire de ladite céramique est révélée par le procédé d'attaque thermique selon l'invention tel qu'il est décrit plus haut;
- la structure ainsi révélée est soumise à une ou des opération(s) d'analyse et/ou de mesure et/ou d'observation.

De préférence ladite opération peut être toute opération d'analyse et/ou de mesure et/ou d'observation connue de l'homme du métier mais elle comprend de préférence une observation de la surface de la céramique par des moyens optiques ou électroniques et la mesure de la taille des grains.

Avantageusement, la mesure de la taille des grains est réalisée en mettant en oeuvre un logiciel d'analyse des images associé auxdits moyens optiques tels qu'un microscope optique.

L'invention concerne enfin une céramique polie, attaquée thermiquement, dans laquelle la surface de ladite céramique est attaquée uniformément et la géométrie des sillons de joints de grains révélés est symétrique, homogène et régulière

D'autres caractéristiques et avantages de l'invention apparaîtront mieux à la lecture de la description qui suit, donnée bien entendu à titre illustratif et non limitatif en référence aux figures annexées.

### Brève description des figures

- La figure 1 est une vue en coupe latérale qui représente un sillon au joint de grains révélé thermiquement.
- La figure 2 est une image optique d'un échantillon du lot A de UO₂ révélé par voie chimique.
- La figure 3 est une image optique d'un échantillon du lot A de UO₂ après attaque thermique 15 minutes à 1650°C sous H₂ sec.
- La figure 4 est un graphique donnant les courbes de densités granulométriques d'un échantillon du lot A de UO₂ obtenues après une attaque chimique (courbe en trait mixte) et des attaques thermiques sous atmosphère de CO₂ + 10 vpm O₂ à 1250°C, 1350°C, et 1450°C (respectivement courbes en grands pointillés, en trait plein, et en petits pointillés).

En ordonnée est portée la fréquence en % et en abscisse est porté le diamètre équivalent en µm.
- La figure 5 est un graphique analogue à celui de la figure 4 donnant les courbes de densités granulométriques du lot B de UO₂ obtenues après une attaque chimique (courbe en trait mixte), et des attaques thermiques sous atmosphère de CO₂ + 10 vpm de O₂ à 1350°C et 1450°C (respectivement courbes en trait plein, et en petits pointillés).
- la figure 6 est un graphique analogue à ceux des figures 4 et 5 qui donne les courbes de densités granulométriques du lot C de UO₂ après attaque chimique, et attaque thermique sous atmosphère de CO₂ + 10 vpm de O₂ à 1450°C.
- la figure 7 est une image optique (micrographie) d'un échantillon du lot MOX 2 après attaque thermique sous CO₂ + 10 vpm de O₂ à 1350°C pendant 30 minutes.
- La figure 8 est une image optique d'un échantillon du lot MOX 1 après attaque thermique sous CO₂ + 10 vpm de O₂ à 1350°C pendant 30 minutes.
- La figure 9 est une image X correspondant à l'image optique de la figure 8.
- La figure 10 est une image optique d'un échantillon du lot MOX 1 après attaque thermique sous CO₂ et 10 vpm de CO₂ à 1350°C pendant 30 minutes.
- La figure 11 est une image X correspondant à l'image optique de la figure 10.
- La figure 12 est un graphique analogue à ceux des figures 2 à 4 qui donne les courbes de densités granulométriques d'un échantillon du lot MOX 1 après attaques chimique et thermique sous CO₂ + 10 vpm de O₂ à 1350°C pendant 30 minutes.
- La figure 13 est un graphique analogue à celui de la figure 12 mais relatif à un échantillon du lot MOX 2.
- La figure 14 est une image électronique (micrographie) d'un échantillon du lot A (UO₂) attaqué sous Ar + 10 vpm O₂ à 1650°C qui met en évidence un joint de grains dissymétrique.
- La figure 15 est un « zoom » de la micrographie de la figure 15.
- La figure 16 est une image électronique d'un échantillon du lot A attaqué sous CO₂ + 10 vpm O₂ à 1350 °C qui montre l'uniformité de la révélation.
- la figure 17 est un schéma qui présente les profils de joints de grains mesurés par microscope à force atomique (AFM) sur de l'UO₂ attaqué thermiquement sous Ar + 10 vpm de O₂ (profil a) et sous CO₂ + 10 vpm de O₂ (profil b).

Exposé détaillé des modes de réalisation de l'invention.

La description et les exemples qui suivent illustrent la préparation d'échantillons de céramiques nucléaires UO₂ et MOX, leur traitement par un procédé d'attaque chimique, par un procédé d'attaque thermique sous atmosphère réductrice, et par le procédé de l'invention d'attaque thermique sous atmosphère oxydante, ainsi que les résultats obtenus par ce traitement et la mesure de la taille de grains effectuée sur les céramiques traitées dont la microstructure a été révélée par l'attaque.

### 1. Préparation des échantillons

### 1.1. Caractéristiques des échantillons (UO₂ et MOX) étudiés.

Les pastilles d'oxyde d'uranium étudiées sont issues de 3 lots d'échantillons (A,B,C) réalisés, soit à partir de poudres de dioxyde d'uranium de nature différente (voie sèche ou voie humide lot 1 et lot 2), soit frittés dans des conditions différentes.

Les pastilles de combustibles MOX sont issues de deux lots (MOX 1 et MOX 2) fabriqués dans des conditions similaires selon le procédé MIMAS (MIcronization of MASterblend) avec les deux types de poudres d'UO₂ voie humide lot 1 et lot 2.

La poudre de PuO₂ utilisée provient quant à elle de l'usine de retraitement de La Hague, elle se présente sous la forme de plaquettes lamellaires à base carrée.

Le procédé MIMAS est connu de l'homme du métier et ne sera pas décrit plus avant.

### 1.2 Préparation céramographique des échantillons.

La préparation des échantillons, tronçonnage et polissage, constitue une étape essentielle pour l'étude microstructurale des matériaux par analyse d'images. Elle doit être particulièrement soignée et adaptée aux matériaux étudiés.

Les échantillons qui sont des pastilles cylindriques d'un diamètre de 8 mm et d'une hauteur de 12 mm, présentent tous des densités relatives élevées et similaires voisines de 95 %. La préparation céramographique des échantillons est donc effectuée selon une même procédure.

Après tronçonnage et enrobage, dans une résine telle qu'une résine araldite®, une série de prépolissages sur différents papiers abrasifs de taille de grains respectifs de 76, 35, 22 et 15 µm, est effectuée, suivie d'un polissage final sur feutre recouvert d'une pâte diamantée dont les grains mesurent environ 1 µm.

Un nettoyage de la surface est réalisé entre chaque étape de (pré)polissage par immersion de l'échantillon dans un bain aqueux soumis aux ultrasons.

Le désenrobage se fait par un léger chauffage de la résine, qui en se dilatant permet de libérer l'échantillon.

### 2. Dispositifs expérimentaux d'attaque thermique.

La particularité d'un four d'attaque thermique réside principalement dans sa faible inertie thermique, qui autorise des vitesses de montée (et de descente) en température élevées. Deux types de fours sont utilisés dans les exemples ci-dessous selon l'atmosphère considérée et/ou l'oxyde considéré (UO₂ ou (U,Pu)O₂).

### 2.1 Four tubulaire vertical

Un four tubulaire vertical PYROX VT 30® est utilisé pour l'attaque thermique, en conditions oxydantes, de l'UO₂. C'est-à-dire dans le cadre du procédé selon l'invention.

Ce four est chauffé par quatre résistances en chromite de lanthane.

Le tube de travail, placé au centre des quatre résistances, est en Al₂O₃ dense et étanche.

Le raccordement étanche d'une bride en acier inox à chaque extrémité du tube permet de travailler sous atmosphère contrôlée.

Le refroidissement des brides est assuré par circulation d'eau.

Afin de vérifier à la fois l'étanchéité du four et la teneur en oxygène des différents gaz utilisés (Ar + 10 vpm O₂, CO₂ + 10 vpm O₂), une jauge à oxygène (sonde zircone) raccordée en sortie de four, mesure la pression partielle d'oxygène de l'atmosphère.

Les vitesses maximales de montée et de descente en température, essentiellement limitées par la résistance au choc thermique du tube en alumine, sont de 1200°C/h.

Une mise en place précise de l'échantillon, à la fois dans la zone isotherme du four et à 1,5 cm du thermocouple de mesure, permet de garantir une précision de la température sur l'échantillon de ± 5°C.

L'alimentation en gaz est contrôlée en débit et en pression (débit de 10 l/h). L'enceinte du four est à la pression atmosphérique en utilisation normale.

### 2.2 Four de thermobalance.

L'étude du gravage thermique du combustible MOX et de l'oxyde d'uranium sous atmosphère réductrice (sous H₂) ou oxydante (CO₂) de l'art antérieur a été réalisée dans un four de thermobalance -NETZSCH STA 429®- placé en boîte à gants. Le tube de travail est en Al₂O₃ dense et étanche. Les paramètres expérimentaux sont similaires à ceux du dispositif précédent à savoir :
- vitesses de montée et de descente en température de 1200°C/h,
- précision sur la mesure de la température de ± 5°C,
- débit de gaz (H₂ ou CO₂) de 10 l/h.

L'enceinte du four est à la pression atmosphérique.

Les exemples 1 à 5 suivants illustrent les attaques chimiques, thermiques réalisées sur le combustible UO₂.

### EXEMPLE 1

Dans cet exemple, on effectue l'attaque chimique des échantillons des lots de UO₂ A, B, et C.

L'attaque chimique a été réalisée en utilisant une solution acide (H₂O, H₂O₂, H₂SO₄).

On constate que la microstructure révélée par l'attaque chimique (voir la figure 2 relative à l'attaque chimique d'un échantillon du lot A) illustre bien les inconvénients d'une telle attaque à savoir entre autres une coloration différente des sections de grains et une révélation incomplète des joints de grains.

### EXEMPLE 2

Dans cet exemple, on effectue l'attaque thermique sous atmosphère réductrice (H₂ sec) des échantillons des lots de UO₂, A, B, et C.

Les conditions opératoires de ces expériences réalisées sous une atmosphère d'hydrogène sec sont résumées dans le tableau I suivant, les températures de montée et de descente étant fixées à 1200°C/h.

**TABLEAU I:**

| Conditions opératoires des expériences réalisées sous H₂ sec | |
|---|---|
| TEMPERATURE (°C) | DUREE D'ATTAQUE (min) |
| 1550 | 30 |
| 1550 | 60 |
| 1600 | 15 |
| 1600 | 30 |
| 1650 | 15 |
| 1650 | 30 |

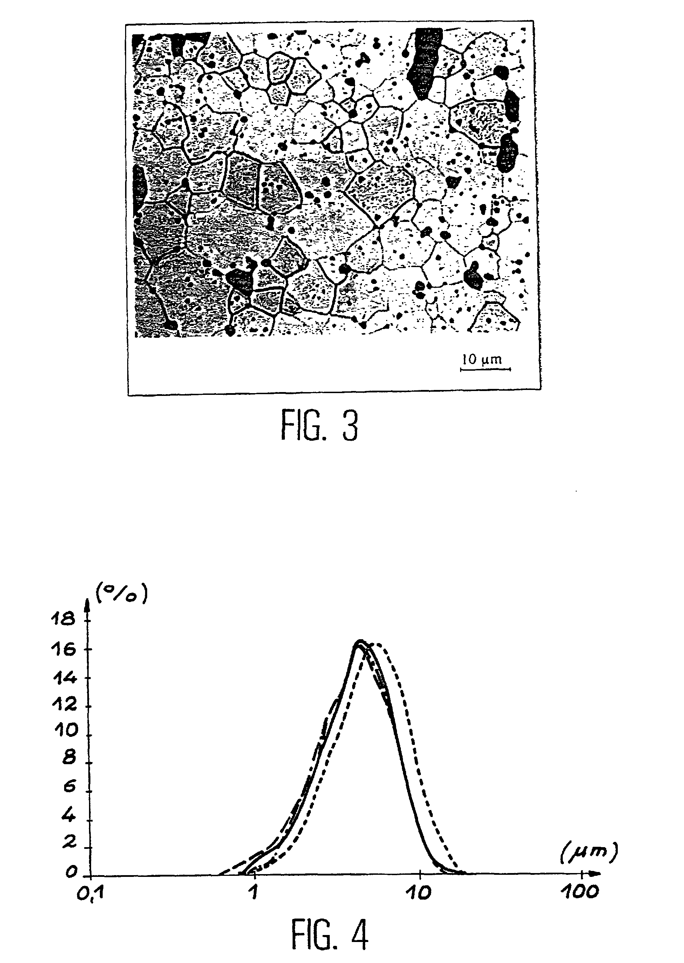

L'observation optique des microstructures attaquées (voir figure 3) montre que le meilleur résultat est obtenu pour des paramètres de température et de durée suivants : 1650°C et 15 min.

Bien que ces révélations soient de meilleure qualité que celles obtenues après attaques chimiques, un certain nombre d'inconvénients déjà cités plus haut demeurent à savoir :
- une image optique résultante non uniforme (voir figure 3).

Le réseau de joints de grains binarisé automatiquement présente donc des discontinuités qui nécessitent une correction manuelle importante lors de l'étape de traitement de l'image (voir figure 3).
- la mise en évidence de défauts cristallins tels que des stries à la surface du matériau ou des remontées de dislocations. Ces défauts génèrent un bruit de fond qui sera d'autant plus gênant que l'échantillon sera poreux, car des confusions peuvent se produire entre la porosité, le bruit de fond et le réseau de joints de grains,
- la nécessité d'une technologie de four adaptée au choc thermique et à une montée rapide à des températures voisines de 1700 °C.

### EXEMPLE 3

Dans cet exemple, conforme à l'invention, on effectue l'attaque thermique sous atmosphère oxydante d'un échantillon du lot A de UO₂.

L'atmosphère oxydante est constituée d'argon et de 10 vpm O₂.

Les conditions opératoires des différents essais sont résumées dans le tableau II suivant:

**TABLEAU II:**

| Conditions opératoires de l'attaque thermique sous Ar + 10 vpm O₂ | |
|---|---|
| Température (°C) | Durée d'attaque (min) |
| 1300 | 60 |
| 1550 | 30 |
| 1600 | 30 |
| 1650 | 10 |
| 1650 | 30 |
| 1680 | 5 |

Les révélations céramographiques sont quant à elles, comparables à celles obtenues par attaque thermique sous H₂ sec et présentent les mêmes inconvénients (révélation hétérogène des joints de grains, révélation des défauts cristallins...). Les meilleurs résultats sont obtenus avec les paramètres d'attaque thermique (température, durée de palier) suivants : 1650°C, 15 min et 1680°C, 5 min.

Le potentiel chimique d'oxygène de ce mélange gazeux varie de -150 kJ/mole à -200 kJ/mole entre 1300°C et 1700°C et se situe donc en dehors des valeurs définies dans le procédé de l'invention qui opère en outre à des températures globalement plus basses.

### EXEMPLE 4

Dans cet exemple, conforme à l'invention, on effectue l'attaque thermique sous atmosphère oxydante des échantillons des lots de UO₂ A, B et C.

L'atmosphère oxydante est constituée de CO₂ et de 10 vpm d'O₂.

Les conditions opératoires des différents essais sont résumées dans le tableau III.

Le seul paramètre invariant est la durée de l'attaque thermique, fixée à 30 minutes.

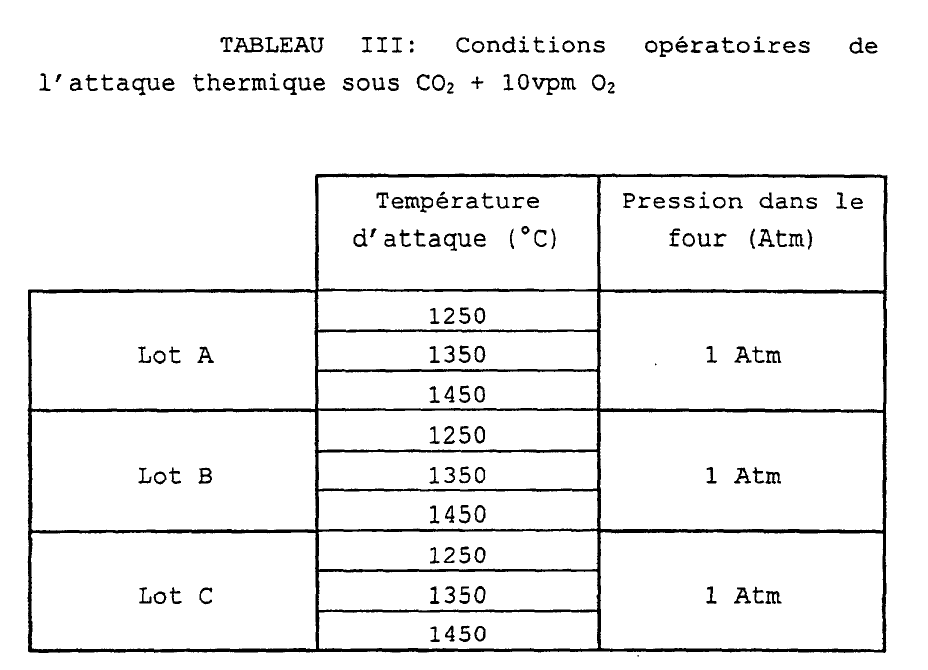

L'attaque thermique oxydante réalisée sous atmosphère de CO₂ et O₂ 10 vpm donne des révélations céramographiques d'excellentes qualités et un gravage thermique très homogène aux joints de grains. On note en particulier l'absence de figures d'attaques présentes après une attaque thermique sous atmosphère réductrice par exemple de H₂.

### EXEMPLE 5

Dans cet exemple, on réalise la mesure de la taille des grains et on démontre l'intérêt de l'attaque thermique sous atmosphère oxydante de CO₂ pour la révélation de la microstructure des combustibles nucléaires à base de UO₂.

En particulier, on démontre qu'aucune modification, en terme de croissance granulaire n'est engendrée par ce mode d'attaque.

Pour ce faire les densités granulométriques en nombre du diamètre équivalent aux sections de grains sont comparées entre une attaque chimique dans les conditions citées précédemment, et les attaques thermiques selon l'invention en atmosphère oxydante sous CO₂ + 10 vpm O₂ (voir exemple 4 ci-dessus).

On détermine également le diamètre moyen déterminé par l'analyse champ par champ. Les quartiles sont également calculés. Ils permettent de caractériser la dispersion des distributions granulométriques des différentes attaques.

On a appliqué un plan d'échantillonnage comportant l'analyse d'un minimum de 1800 sections de grains selon une implantation aléatoire stratifiée des champs de mesures.

Dans cet exemple, on a étudié l'influence de la température d'attaque 1250, 1350, 1450°C sur les échantillons de dioxyde d'uranium des lots A,B,C décrit plus haut. La durée d'attaque est de 30 minutes dans tous les cas.

Les densités granulométriques obtenues sont représentées sur les figures 4, 5, 6 pour les échantillons des lots A, B, C, on a également observé l'état de la surface des trois échantillons suite aux attaques. Les conclusions qui peuvent être tirées de cette étude sont les suivantes pour chacun des lots traités.

Lot A : Il apparaît que le matériau peut être attaqué jusqu'à une température de 1350°C sans évolution significative de la microstructure.

On constate que les trois courbes de densité granulométrique respectivement pour des attaques thermiques à 1250°C et 1350°C et pour une attaque chimique se superposent, et que la taille moyenne n'évolue pas entre les différentes attaques et reste voisine de 5 µm. La température de 1250°C semble constituer pour ce lot une température limite inférieure pour la révélation céramographique. Toutefois, l'oeil perçoit encore le réseau de joints de grains.

A 1450°C il existe une certaine croissance granulaire au moins en surface, si bien que la révélation est légèrement moins bonne à cette température.

Un examen de la surface d'un échantillon attaqué à cette température permet d'observer un creusement légèrement excessif du sillon au joint de grains auquel s'ajoute un phénomène d'apparition-disparition de certains joints de grains.

Une température de 1350°C apparaît donc comme le meilleur compromis pour obtenir une qualité de l'image suffisante, donc apte à être traitée automatiquement sans entraîner d'évolution mesurable de la microstructure.

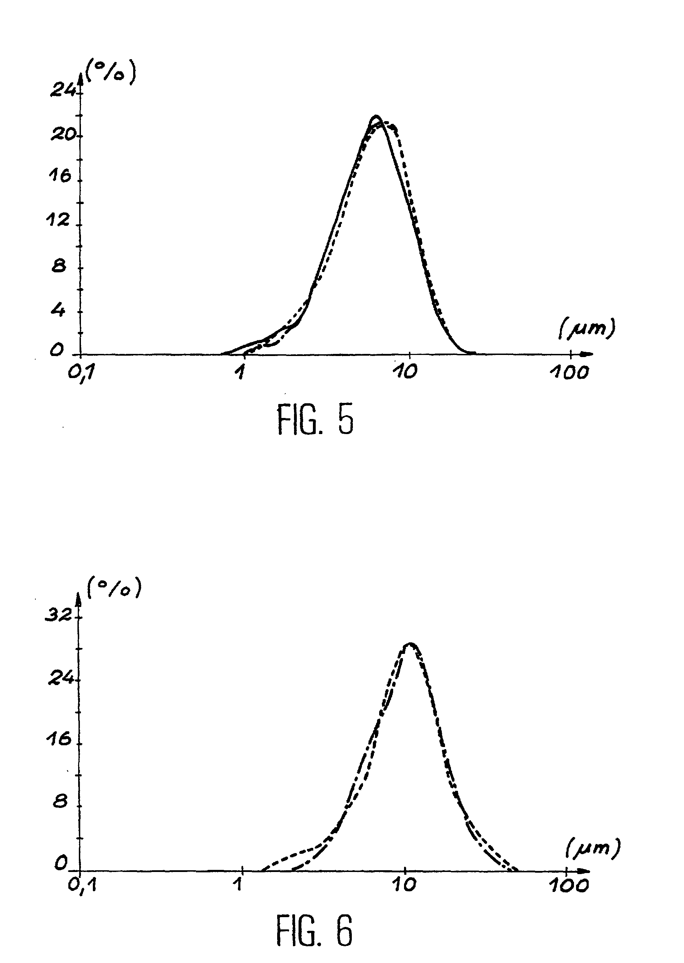

Lot B : Les courbes de densité granulométrique de la figure 5 montrent très clairement que l'attaque thermique sous atmosphère oxydante de CO₂ n'engendre pas de modifications de la distribution et de la taille moyenne des grains.

Les attaques à 1350°C et 1450°C donnent un résultat excellent et permettent surtout de traiter automatiquement les images.

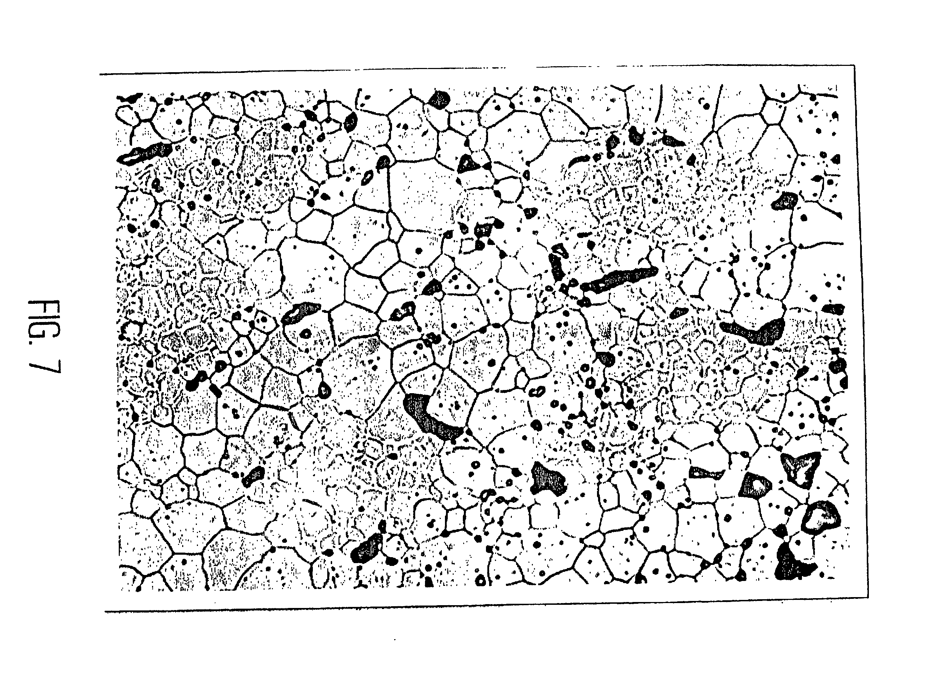

Lot C: on observe sur la figure 6 une excellente superposition des courbes de densité granolumétrique ce qui nous permet d'affirmer que l'attaque thermique ne modifie pas la structure du lot C.

Le réseau de joints de grains est révélé de manière excellente par exemple à 1450°C et permet une analyse automatique des images.

### EXEMPLE 6

Dans cet exemple, on réalise l'attaque chimique des échantillons des combustibles MOX 1 et MOX 2 dont les caractéristiques ont été indiquées plus haut.

L'attaque chimique a été réalisée en utilisant 2 solutions acides.

On commence par effectuer une attaque chimique spécifique des zones à faible enrichissement en plutonium, en utilisant une solution (H₂O, H₂O₂, H₂SO₄) puis après polissage une deuxième attaque acide (H₂O, H₂O₂, NH₄NF₂) permettant de révéler la totalité de la microstructure est effectuée.

On constate que la microstructure révélée après chacune des attaques illustre bien ces inconvénients de l'attaque chimique à savoir entre autres une coloration différente des sections de grains et une révélation incomplète des joints de grains.

### EXEMPLE 7

Dans cet exemple, on effectue l'attaque thermique sous atmosphère réductrice Argon avec 5% d'hydrogène et 2600 vpm d'H₂O d'échantillons des lots MOX 1 et MOX 2 à des températures proches de 1600°C et avec une durée de palier de 10 à 30 minutes.

Les essais conduisent à une révélation de la surface de la céramique identique à celle obtenue sur l'oxyde d'uranium avec en particulier une image optique résultante non uniforme.

### EXEMPLE 8

Dans cet exemple, conforme à l'invention, on effectue l'attaque thermique sous atmosphère oxydante d'échantillons des lots MOX 1 et MOX 2.

L'atmosphère oxydante est constituée de CO₂ et de 10 vpm de O₂, la température d'attaque est fixée à 1350°C et la durée de l'attaque est de 30 minutes.

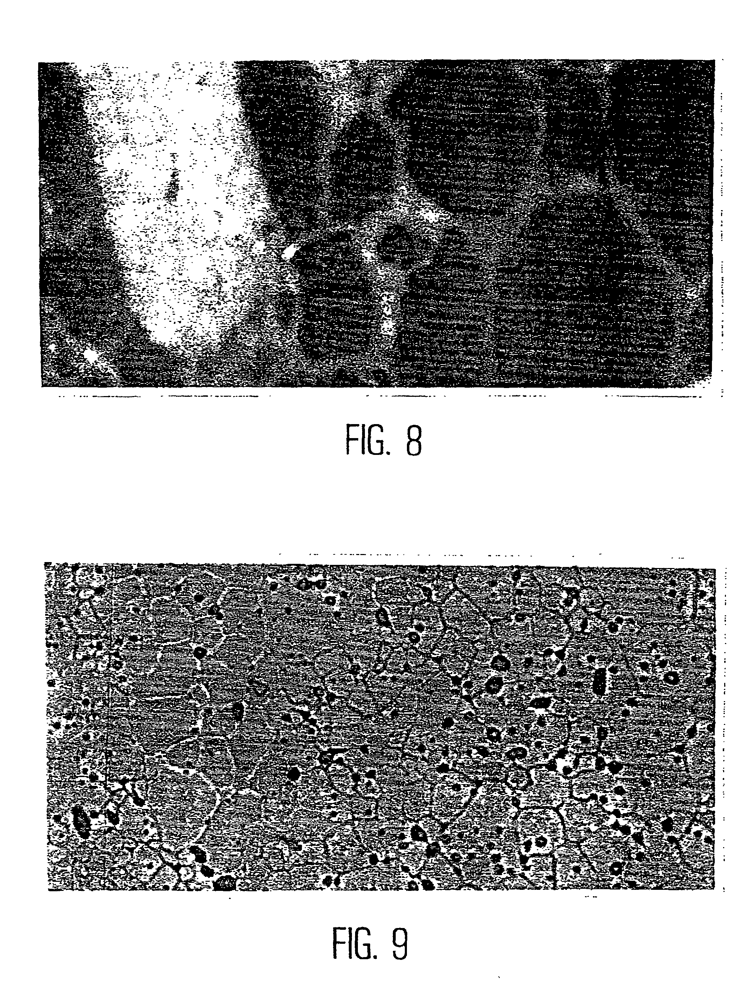

Les révélations céramographiques obtenues sur les deux échantillons MOX 1 et MOX 2 sont présentées sur les figures 7 et 8 qui sont des images optiques de ces 2 échantillons MOX 1 et MOX 2 attaqués sous CO₂ à 1350°C pendant 30 minutes, elles montrent que l'ensemble de leur structure est parfaitement bien révélée.

Cependant, le gravage thermique des joints de grains n'est pas uniforme : les joints de grains de certaines zones isolées apparaissent blancs alors que le reste des joints de grains se caractérise par un trait noir, configuration habituellement rencontrée pour les joints de grains du dioxyde d'uranium.

Des comparaisons entre des mêmes zones d'une section céramographique du MOX 1 attaquée thermiquement sous CO₂ observées au microscope optique et à la microsonde de Castaing ont alors été effectuées.

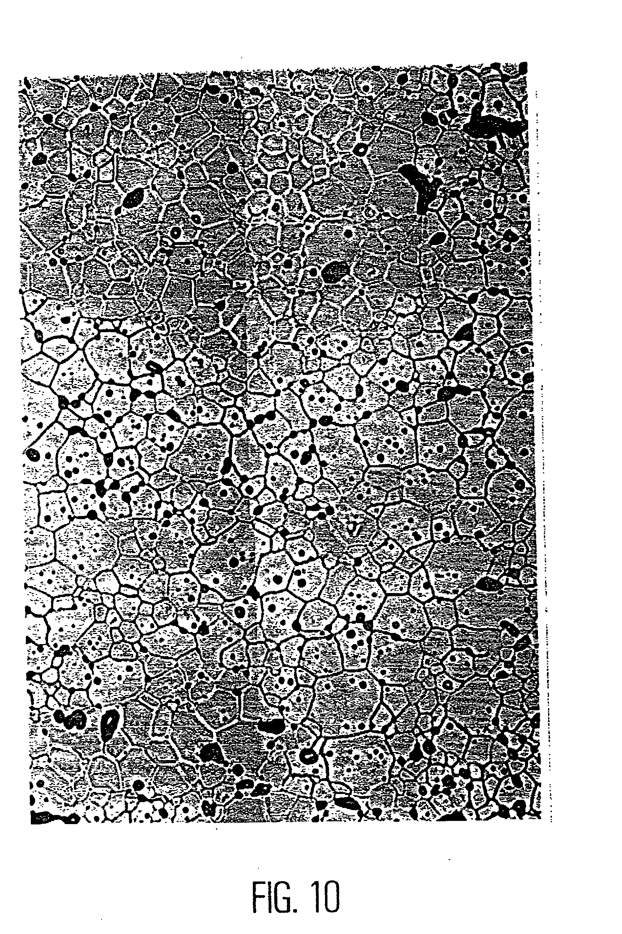

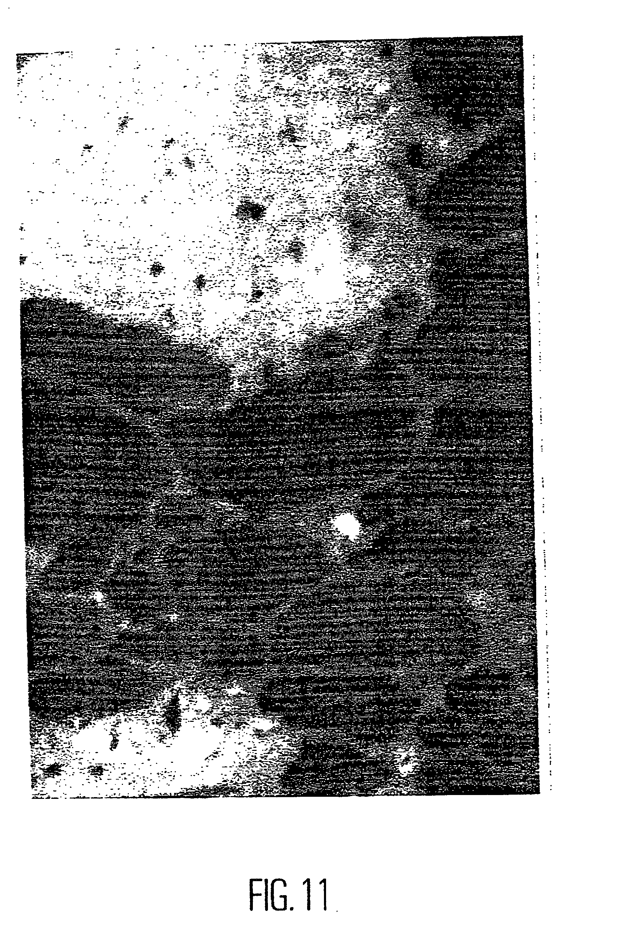

Les figures 8 et 10 représentent des micrographies optiques de MOX 1 obtenues après attaque thermique : elles sont à comparer avec les figures 9 et 11 qui représentent les images X du plutonium de ces mêmes zones obtenues à la microsonde.

Plus la concentration en plutonium est élevée, plus la zone caractéristique de l'image X est claire. La confrontation des images optiques et des images X montre nettement que les joints de grains apparaissant blancs en optique correspondent aux grains plutonifères (constituant les îlots à fortes teneurs en plutonium).

On obtient donc une attaque sélective révélant de manière distincte les zones à fortes teneurs en plutonium (mélange mère) de celle à plus faibles concentrations (matrice).

On notera que cette différence de gravage suivant la teneur locale en plutonium des grains après une attaque thermique oxydante sous CO₂ selon l'invention n'est absolument pas reproduite lors d'attaques thermiques selon l'art antérieur réaliséss en conditions réductrices c'est-à-dire sous hydrogène humidifié.

Cette différence de gravage, qui constitue l'un des effets inattendus et des avantages surprenant du procédé de l'invention lorsqu'on l'utilise sur du combustible MOX, est donc vraisemblablement liée au potentiel chimique d'oxygène spécifique de l'invention imposé par le mélange gazeux utilisé lors de l'attaque.

### EXEMPLE 9

Dans cet exemple, de manière analogue à l'exemple 5, on réalise la mesure de la taille des grains et on démontre l'intérêt de l'attaque thermique (du gravage thermique) sous atmosphère oxydante de CO₂ dans les conditions de l'exemple 8 pour la révélation de la microstructure du MOX, en effectuant des comparaisons entre des mesures granulométriques obtenues par analyse individuelle des sections de grains après attaque chimique et attaque thermique.

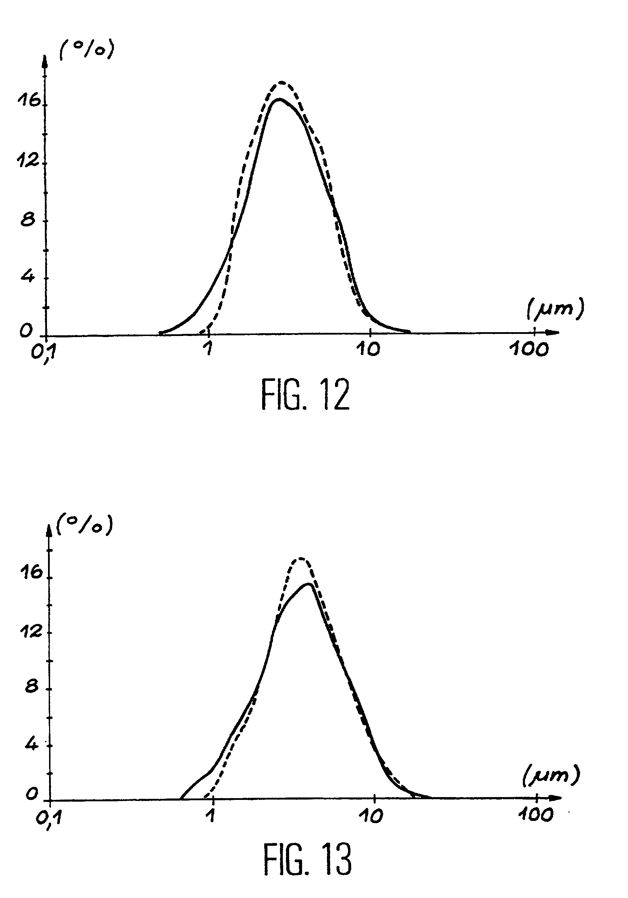

Les courbes de densité granulométrique obtenues pour les échantillons MOX 1 et MOX 2 sont présentés respectivement sur les figures 12 et 13 sur lesquelles les courbes de densité granulométrique obtenues après attaque chimique et attaque thermique (conditions de l'exemple 8) sont respectivement représentées en trait pointillé et en trait plein.

Les courbes de densité granulométrique des sections de grains obtenues après attaque chimique et thermique sont comparables. L'attaque thermique oxydante sous CO₂ ne modifie donc pas la microstructure des combustibles MOX et permet la révélation homogène des joints de grains.

### EXEMPLE 10

Dans cet exemple, on effectue des observations à l'aide d'un microscope à balayage (microscope à effet de champ PHILIPS FEG XL 30) un de échantillons d'UO₂ (lot A) attaqués thermiquement sous une atmosphère oxydante d'argon + 10 vpm O₂ à 1650°C 30 min, sous une atmosphère réductrice d'hydrogène à 1650°C 15 min et sous une atmosphère oxydante de CO₂ + 10 vpm d'O₂ à 1350°C 30 min.

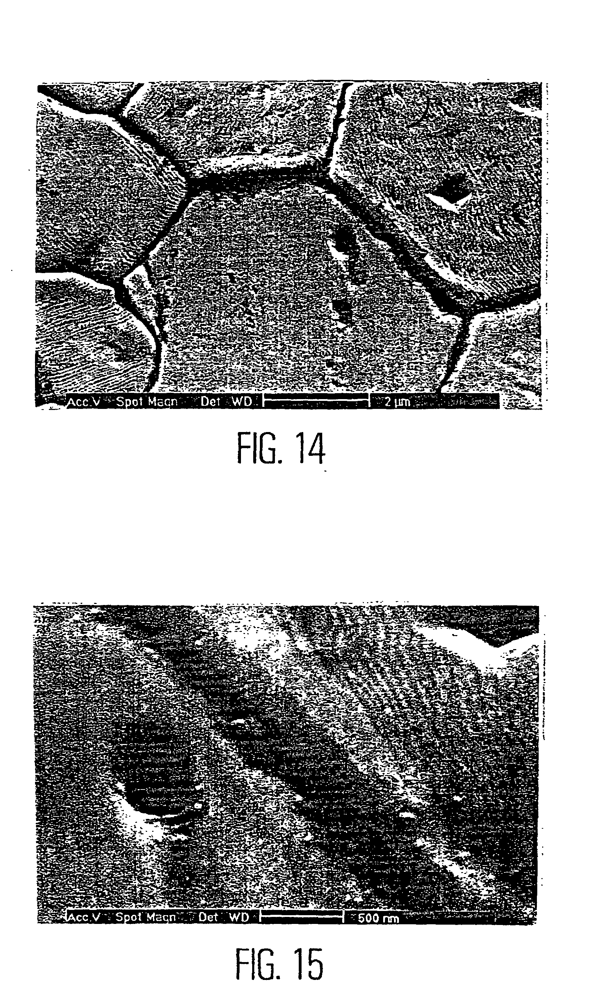

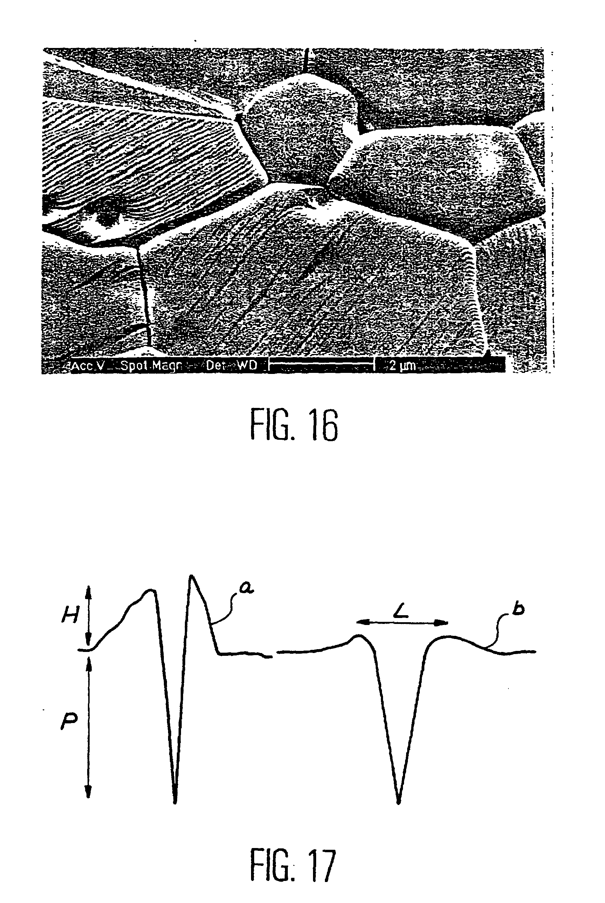

Ces observations montrent que:
- sous argon ou H₂, certains sillons de joints de grains présentent une dissymétrie évidente dans leur géométrie (figures 14 et 15). On notera bien cependant, que tous les joints de grains sont attaqués et révélés contrairement à ce que l'on peut observer au microscope optique du fait de l'ouverture numérique des optiques utilisées.
- sous CO₂, on montre que la surface est attaquée uniformément et que la géométrie des sillons apparaît symétrique et homogène (figure 16).

### EXEMPLE 11

On utilise, dans cet exemple, un microscope à force atomique (A.F.M Nanoscope 2®) pour quantifier de façon précise la géométrie des sillons aux joints de grains pour chacune des attaques oxydantes effectuées sur l'UO₂.

La figure 17 présente deux profils types de joints de grains révélés thermiquement sous Ar (profil a) et sous CO₂ (profil b) confirmant les observations qualitatives précédentes : les joints de grains de l'échantillon attaqué sous CO₂ sont symétriques et de géométries régulière. Les profils mesurés par A.F.M sur ces joints de grains ne présentent pas de variation importante en profondeur (P) en largeur (L) et en hauteur (H), contrairement à ceux mesurés sur l'échantillon attaqué sous Ar comme l'attestent les valeurs du tableau IV.

**Tableau IV :**

| Grandeurs caractéristiques des sillons aux joints de grains mesurées par microscopie à force atomique. | | | |
|---|---|---|---|
| Nature du gaz d'attaque utilisé | Hauteurs minimale et maximale mesurées* (nm) | Largeurs minimale et maximale mesurées*(µm) | Profondeurs minimale et maximale mesurées*(nm) |
| Argon + 10 vpm O₂ | 2-10 | 0,2-1 | 7-18 |
| CO₂ + 10 vpm O₂ | 1-3 | 0,5-0,9 | 13-19 |

| | | | |
|---|---|---|---|
| * Mesures effectuées sur un total de 10 joints de grains | | | |

La qualité de l'image optique de la structure granulaire de l'échantillon est donc fortement conditionnée par la géométrie du sillon crée lors du gravage thermique du joint de grains.

En effet, la surface irrégulière d'un combustible UO₂ révélé sous Ar + 10 vpm O₂ (ou H₂) réfléchit différemment le faisceau lumineux droit du microscope optique.

Suivant la géométrie du sillon, l'image optique de la microstructure apparaîtra comme non uniforme, même si tous les joints de grains sont attaqués.

Dans le cas d'une attaque thermique oxydante sous CO₂ + 10 vpm O₂ tous les sillons sont géométriquement identiques et l'image optique de la microstructure apparaîtra uniforme et sera donc apte à être traitée par un algorithme automatique d'analyse d'images.

## Revendications

1. Procédé d'attaque thermique d'une céramique dans lequel ladite attaque thermique est réalisée dans un four à atmosphère contrôlée constituée par un gaz oxydant fournissant un potentiel chimique d'oxygène de -75 kJ/mol à -125 kJ/mol, et comprend les étapes successives suivantes:
- montée rapide en température du four à une vitesse de 900°C/h à 1500°C/h depuis la température initiale jusqu'à un palier en température;
- maintien de la température audit palier à une valeur de 1250°C à 1450°C pendant une durée de 30 minutes à 15 minutes;
- descente en température jusqu'à la température finale.

2. Procédé selon la revendication 1 dans lequel ladite céramique est constituée par un ou plusieurs oxyde(s) réfractaire(s) de métaux choisis parmi les oxydes de d'aluminium, les oxydes de cérium, les oxydes de métaux de la famille des actinides tels que U, Pu et Th, et les oxydes mixtes de ces métaux.

3. Procédé selon la revendication 2 dans lequel ladite céramique est une céramique monophasée.

4. Procédé selon la revendication 2 dans lequel ladite céramique est une céramique polyphasée

5. Procédé selon la revendication 3 dans lequel ladite céramique est un combustible nucléaire préparé à partir de poudre d'UO₂.

6. Procédé selon la revendication 4 dans lequel ladite céramique est un combustible nucléaire du type (U, Pu)O₂.

7. Procédé selon la revendication 1 dans lequel ledit gaz oxydant est constitué d'un gaz vecteur et d'oxygène.

8. Procédé selon la revendication 7 dans lequel le gaz vecteur est choisi parmi le CO₂, l'argon, les autres gaz inertes et leurs mélanges.

9. Procédé selon l'une quelconque des revendications 7 et 8 dans lequel le gaz oxydant contient de 10 à 3000 vpm d'oxygène.

10. Procédé selon la revendication 9 dans lequel le gaz oxydant est constitué de CO₂ et de 10 vpm d'oxygène.

11. Procédé selon la revendication 9 dans lequel le gaz oxydant est constitué d'argon et de 1000 vpm d'oxygène.

12. Procédé selon la revendication 1 dans lequel la température du palier est de 1300°C à 1400°C.

13. Procédé selon la revendication 12 dans lequel la température du palier est de 1350°C.

14. Procédé selon la revendication 1 dans lequel le potentiel d'oxygène fourni par le gaz oxydant est d'environ -100 kJ/mol.

15. Procédé selon la revendication 1 dans lequel la descente en température du four est réalisée à une vitesse de 900°C/h à 1500°C/h.

16. Procédé selon la revendication 1 dans lequel la céramique est préalablement soumise à un traitement de polissage.

17. Procédé d'étude de la microstructure d'une céramique dans lequel
- la structure granulaire de ladite céramique est révélée par le procédé d'attaque thermique selon l'une quelconque des revendications 1 à 16
- la structure ainsi révélée, est soumise à une ou des opération(s) d'analyse et/ou de mesure et/ou d'observation.

18. Procédé selon la revendication 17 dans lequel ladite opération d'analyse et/ou de mesure et/ou d'observation comprend une observation de la surface de la céramique par des moyens optique ou électroniques et la mesure de la taille des grains.

19. Procédé selon la revendication 18 dans lequel la mesure de la taille des grains est réalisée en mettant en oeuvre un logiciel d'analyse des images obtenues associés auxdits moyens optiques.

20. Céramique polie, attaquée thermiquement par le procédé selon l'une quelconque des revendications 1 à 16, dans laquelle la surface de ladite céramique est attaquée uniformément et la géométrie des sillons de joints de grains révélés est symétrique, homogène et régulière.

## Patentansprüche

1. Verfahren zum thermischen Ätzen einer Keramik, bei dem das thermische Ätzen in einem Ofen mit kontrollierter Atmosphäre durchgeführt wird, die besteht aus einem oxidierenden Gas, das ein chemisches Sauerstoffpotential von -75 bis -125 kJ/mol liefert, und das die folgenden aufeinanderfolgenden Stufen umfasst:
- schnelles Ansteigenlassen der Temperatur des Ofens mit einer Geschwindigkeit von 900 bis 1500 °C/h von der Anfangstemperatur bis auf ein Temperatur-Plateau;
- Halten der Temperatur auf dem Plateau bei einem Wert von 1250 bis 1450 °C für eine Zeitspanne von 30 bis 15 min;
- Absinkenlassen der Temperatur bis auf die Endtemperatur.

2. Verfahren nach Anspruch 1, bei dem die Keramik besteht aus einem oder mehreren feuerfesten (schwerschmelzbaren) Metalloxiden, ausgewählt aus der Gruppe der Oxide von Aluminium, Cer, der Aktiniden-Metalle wie U, Pu und Th und der Mischoxide dieser Metalle.

3. Verfahren nach Anspruch 2, bei dem die Keramik eine Monophasenkeramik ist.

4. Verfahren nach Anspruch 2, bei dem die Keramik eine Polyphasenkeramik ist.

5. Verfahren nach Anspruch 3, bei dem die Keramik ein nuclearer Brennstoff, hergestellt aus UO₂-Pulver, ist.

6. Verfahren nach Anspruch 4, bei dem die Keramik ein nuclearer Brennstoff vom (U, Pu)O₂-Typ ist.

7. Verfahren nach Anspruch 1, bei dem das oxidierende Gas aus einem Trägergas und Sauerstoff besteht.

8. Verfahren nach Anspruch 7, bei dem das Trägergas ausgewählt wird aus der Gruppe CO₂, Argon, anderen Inertgasen und Mischungen davon.

9. Verfahren nach einem der Ansprüche 7 und 8, bei dem das oxidierende Gas 10 bis 3000 vpm Sauerstoff enthält.

10. Verfahren nach Anspruch 9, bei dem das oxidierende Gas aus CO₂ und 10 vpm Sauerstoff besteht.

11. Verfahren nach Anspruch 9, bei dem das oxidierende Gas aus Argon und 1000 vpm Sauerstoff besteht.

12. Verfahren nach Anspruch 1, bei dem die Temperatur des Plateaus 1300 bis 1400 °C beträgt.

13. Verfahren nach Anspruch 12, bei dem die Temperatur des Plateaus 1350 °C beträgt.

14. Verfahren nach Anspruch 1, bei dem das von dem oxidierenden Gas bereitgestellte Sauerstoffpotential etwa -100 kJ/mol beträgt.

15. Verfahren nach Anspruch 1, bei dem die Absenkung der Temperatur des Ofens mit einer Geschwindigkeit von 900 bis 1500 °C/h durchgeführt wird.

16. Verfahren nach Anspruch 1, bei dem die Keramik vorher einer Polierbehandlung unterzogen wird.

17. Verfahren zur Untersuchung des Mikrogefüges einer Keramik, bei dem
- das Korngefüge der Keramik durch das thermische Ätzverfahren nach einem der Ansprüche 1 bis 16 freigelegt wird,
- das so freigelegte Gefüge einer oder mehreren Analyse- und/oder Messund/oder Betrachtungsoperationen unterzogen wird.

18. Verfahren nach Anspruch 17, bei dem die Analysen- und/oder Messund/oder Betrachtungsoperation umfasst das Betrachten der Oberfläche der Keramik mittels optischer oder elektronischer Einrichtungen und das Messen der Größe der Körner.

19. Verfahren nach Anspruch 18, bei dem die Messung der Größe der Körner durchgeführt wird durch Verwendung einer Software zur Analyse der Bilder, die mit den optischen Einrichtungen angefertigt wurden.

20. Polierte Keramik, die nach dem Verfahren nach einem der Ansprüche 1 bis 16 thermisch geätzt worden ist, bei der die Oberfläche der Keramik gleichförmig geätzt ist und die Geometrie der freigelegten Korngefügerillen symmetrisch, homogen und regelmäßig ist.

## Claims

1. Process for the thermal etching of a ceramic, in which said thermal etching is performed in a furnace under a controlled atmosphere constituted by an oxidizing gas supplying an oxygen chemical potential of - 75 kJ/mole to -125 kJ/mole and comprises the following, successive stages:
- rapid temperature rise of the furnace at a rate of 900°C/h to 1500°C/h from the initial temperature to a temperature plateau,
- maintaining the temperature of said plateau at a value of 1250°C to 1450°C for a period of 30 minutes to 15 minutes,
- lowering the temperature to the final temperature.

2. Process according to claim 1, wherein said ceramic is constituted by one or more refractory oxides of metals chosen from among aluminium oxides, cerium oxides, metal oxides of the family of actinides such as U, Pu and Th and mixed oxides of these metals.

3. Process according to claim 1, wherein said ceramic is a monophase ceramic.

4. Process according to claim 2, wherein said ceramic is a polyphase ceramic.

5. Process according to claim 3, wherein said ceramic a nuclear fuel prepared from UO₂ powder.

6. Process according to claim 4, wherein said ceramic is a nuclear fuel of type (U, Pu) O₂.

7. Process according to claim 1, wherein said oxidizing gas is constituted by a vector gas and oxygen.

8. Process according to claim 7, wherein the vector gas is chosen from among CO₂, argon, other inert gases and their mixtures.

9. Process according to either of the claims 7 and 8, wherein the oxidizing gas contains 10 to 3000 vpm of oxygen.

10. Process according to claim 9, wherein the oxidizing gas is constituted by CO₂ and 10 vpm oxygen.

11. Process according to claim 9, wherein the oxidizing gas is constituted by argon and 1000 vpm oxygen.

12. Process according to claim 1, wherein the temperature of the plateau is 1300 to 1400°C.

13. Process according to claim 12, wherein the temperature of the plateau is 1350°C.

14. Process according to claim 1, wherein the oxygen potential supplied by the oxidizing gas is approximately -100 kJ/mole.

15. Process according to claim 1, wherein the temperature drop of the furnace takes place at a rate of 900 to 1500°C/h.

16. Process according to claim 1, wherein the ceramic undergoes a polishing treatment beforehand.

17. Process for the study of the microstructure of a ceramic, wherein the granular structure of said ceramic is revealed by the thermal etching process according to any one of the claims 1 to 16 and the thus revealed structure undergoes one or more analysis and/or measurement and/or observation operations.

18. Process according to claim 17, wherein said analysis and/or measurement and/or observation operation comprises an observation of the surface of the ceramic by optical or electronic means and the measurement of the size of the grains.

19. Process according to claim 18, wherein the measurement of the size of the grains takes place by using an analysis software of images obtained associated with said optical means.

20. Polished ceramic thermally etched by any one of the claims 1 to 16, wherein the surface of said ceramic is uniformly etched and the geometry of the grooves of the grain boundaries revealed is symmetrical, homogeneous and regular.
